# EUROPEAN PATENT APPLICATION

(11) **EP 0 849 580 A2**
(43) Date of publication of application: **24.06.1998**
(21) Application number: 97122178.3
(22) Date of filing: 15.12.1997
(51) Int. Cl.: G01M 3/18

(54) **System for sensing and blocking leakages of liquid fed by a network**

(30) Priority: 18.12.1996 IT MI962651
(71) Applicant: Faustini, Sergio, 21020 Comabbio, Varese (IT)
(72) Inventor: Faustini, Sergio, 21020 Comabbio, Varese (IT)
(74) Representative: Luksch, Giorgio, Dr.-Ing.

(57) **Abstract**

The system comprises: at least one device for sensing the presence of a liquid at points of an environment in which the sensing devices are positioned, each sensing device being provided with means enabling signals to be emitted following the sensing of liquid presence; and an actuator device for closing a valve provided in the liquid supply network, to block its feed following signal emission by a sensing device.

## Description

This invention relates to a system for sensing within an environment the presence of a liquid fed by a relative network present in the environment, and for blocking the liquid feed.

The term "network present in the environment" signifies hereinafter not only the actual liquid supply main but also the relative branches, including any containers which receive liquid fed by the network.

The damage which can be caused in dwellings, offices, industrial buildings, agricultural buildings and outhouses by leakages of water from the water main contained in such environments, or from supply networks for other liquids (such as wine or oil) are well known.

The object of this invention is to obviate the damage caused by such leakages, or at least to limit it.

This object is attained by the system of the invention, characterised by comprising
- at least one device for sensing the presence of a liquid at points of an environment in which the sensing devices are arranged, each sensing device being provided with means enabling signals to be emitted following the sensing of liquid presence; and
- an actuator device for closing a valve, provided in the network to block liquid feed following signal emission by a sensing device.

In one embodiment of this invention, the sensing device comprises:
- an element of a known expandable material able to significantly increase its volume following absorption of a liquid, said element being in contact with the floor or walls of the environment either directly or via an interposed element able to be soaked with liquid; and
- a switch, closable following the increase in volume of the expandable element, to operate said signal emitter means with which the sensing device is provided.

The signal emitter means can comprise an electrical circuit for transmitting signals from the sensing device to the actuator device. This electrical circuit can be a specific circuit provided for the purpose, or alternatively the usual electrical installation already present in the environment for electricity distribution can be used. In both cases, on closure of the said switch, an electrical signal, advantageously an electric current provided by a battery, is circulated. This electrical signal or current activates the actuator device which operates said valve provided in the liquid supply main or in its branches.

The signal emitter means can also be a device for emitting signals via radio waves, or a known carrier wave transmitter using as the signal transfer line the electrical installation already present in the environment concerned (for example a dwelling or an industrial building).

The system of the invention can be completed by a further actuator device which, following signal emission by the sensing device, shuts off power to the electrical installation which may be present in the environment, or to part of it, and/or to operate an acoustic and/or visual alarm, and/or to operate devices able to feed alarm messages, for example via telephone or radio.

The invention will be more apparent from the description of one embodiment thereof given hereinafter. The description refers to the accompanying drawing, on which:
Figure 1 is a scheme of a system according to the invention, of the type using, as signals, carrier waves conveyed by the electrical installation already existing in the environment concerned; and
Figure 2 is a scheme of a system operating with radio waves.

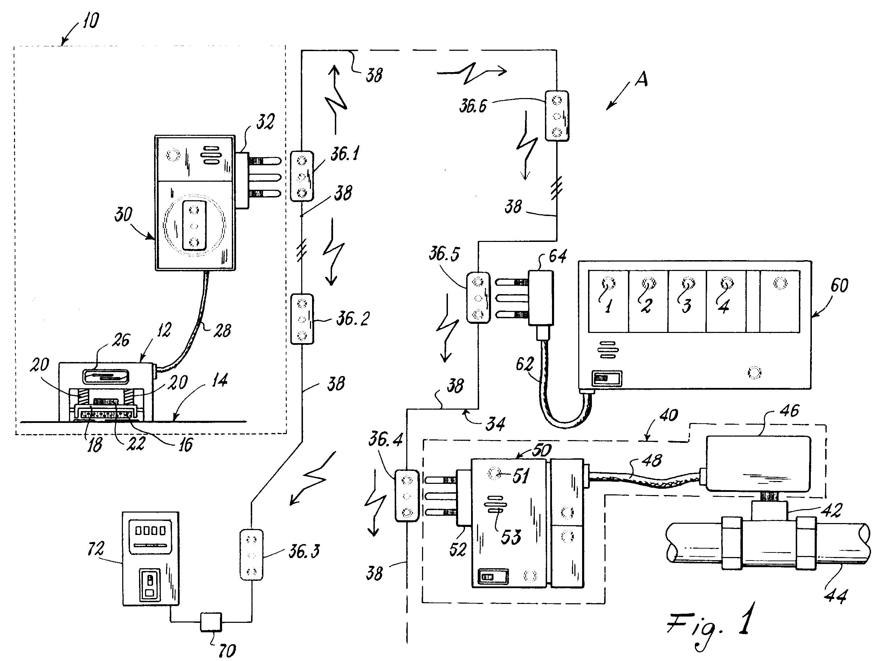

From Figure 1 it can be seen that the system A comprises a device for sensing the presence of a liquid, for example water, the device being indicated overall by 10 and enclosed in a rectangular frame shown by dashed lines. The sensing device comprises a liquid or water presence sensor indicated in the figure by 12, and in this specific case resting directly on the floor 14 of the environment. It could however rest on a mat (not shown) of material which absorbs the liquid, so as to increase the range of action of the sensor 12. The sensor 12, shown schematically in the figure, has a lower cavity into which there can be inserted an element of a known commercially available material able to expand and hence considerably increase its volume (up to as much as 10 times) on making contact with liquids (such as water) which may wet the floor at the point in which the sensor 12 is positioned, or which may come into contact with said mat.

The volume increase of the expandable element 16 causes a permanent magnet 22, positioned above the expandable element 16, to move upwards against means (in this specific case the springs 20) which maintain it in its lowest position when the expandable element is in its unexpanded state. The volume increase of the expandable element 16 causes the permanent magnet 22 to approach a conventional magnetic switch 26 positioned in the water-tight upper part of the sensor 12, to cause the magnetic switch 26 to close. This switch is connected by an electric cable 28 to a carrier wave generator 30 of known type, so that on closure of the switch 26 the generator 30 is activated. This latter can be connected by its provided plug 32 to the dwelling electrical installation (indicated overall by 34) which in Figure 1 is represented schematically by sockets (indicated by the reference numeral 36 followed by a progressive number from 1 to 6) and relative electrical connecting cables 38. In the example illustrated in this figure, the carrier wave generator 30 is connected by the relative plug 32 to the socket 36.1 of the electrical installation 34.

As an alternative, instead of the permanent magnet 22 and magnetic switch 26, there can be more simply provided an electrical terminal applied above the expandable element which, when this latter increases in volume, makes contact with a corresponding fixed electrical terminal, to close said electrical circuit.

An actuator device 40 (represented in Figure 1 contained within a dashed closed line) able to open or close a valve 42 which closes the liquid supply network (for example the water supply), comprises an actuator means 46 connected by an electric cable 48 to a receiver of known type 50 (in this specific case a known single-channel carrier wave receiver), connected to the electrical installation 34 by a plug 52 insertable into a socket 36.4 of the installation 34. Consequently, when the carrier wave generator 30 emits a signal, this is received by the receiver 50 via the electrical installation 34. In addition to signalling an alarm condition (for example by an indicator lamp 51 and/or the emission of an acoustic signal by a buzzer 53), the receiver 50 comprises a conventional operating unit for a servomotor contained in the actuator means 46 to close the valve 42 and hence interrupt liquid flow from the network 44. The actuator 46 can comprise an electric motor (possibly of low voltage) which when operated rotates the stem of the valve 42 in the sense of closing it, and a lever which when the valve reaches its end-of-travel position engages a microswitch which interrupts power to the electric motor. As an alternative, the actuator 46 can consist of the solenoid unit which forms part of a solenoid valve replacing the valve 42. The valve 42 remains closed until the alarm condition re-occurs on the pulse generator 30, and in practice until the relative sensor 12 of the sensing device 10 is activated. Conveniently, the solenoid valve is provided with means to prevent the valve opening unless as the result of this specific activation, in order to prevent the solenoid valve reopening following an accidental interruption in the power supply. The same receiver 50, or a different but similar receiver (not shown) located in a suitable position, can by means of its control unit operate a conventional switch 70 to interrupt the power supply downstream of the meter 72 provided in the environment.

If the environment to be kept monitored requires more than one sensing device 10 to be provided (for example one in the kitchen and one in each bathroom of the dwelling) the system can be completed with a conventional receiver (in this specific case of multi-channel type) indicated overall by 60 in the figure, acting as a control centre to indicate from which of the sensing devices 10 the signal originates (the receiver 60 comprises four lamp displays indicated in the figures by the numbers 1 to 4).

The multi-channel receiver 60 can be connected to the actuator installation 34 by the cable 62 and relative plug 64 inserted into the socket 36.5 and is preferably installed in a suitable region of the environment to be monitored.

The receiver 50, the control centre 60 and also the transmitter 10 can advantageously comprise means (not shown, but conventional to the expert of the art) which, when an alarm signal is received, feed alarm signals via the telephone or radio waves, to be received by persons concerned.

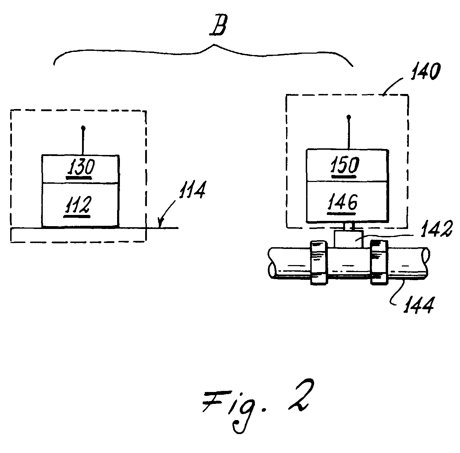

In the system B shown in Figure 2, the sensing device 110 comprises the sensor 112 which rests on the floor 114, and for example can be identical to that described with reference to Figure 1, or be of the type with two or more terminals to be connected together electrically by the liquid, if conducting. In particular the terminals can be totally or partially bare electric cables of any length, or be such cables contained in perforated electrically insulating sheaths (for example of PVC) or in spongy material. The sensing device 10 also comprises an emitter 130 of radio wave signals which are received by the actuator device 140 provided with a radio receiver 150. Again in this case the system can be completed by a multi-channel receiver (not shown in Figure 2) similar to that indicated by 60 in Figure 1, but with the difference that it also comprises a receiver for the radio waves emitted by the emitter 130.

It should be noted that although the sensors 12 and 112 are shown in the figures resting on the floor, they could equally be applied to vertical or inclined walls reachable by liquids.

It should be noted that the sensor (12 and 112) for sensing the presence of liquid can also be used as a maximum liquid level indicator. In this respect the sensor can be positioned on a small horizontal shelf or on a vertical wall at a determined level, to sense the presence of the liquid when its surface reaches the sensor. In that case the system of the invention operates as a device arranged to interrupt the feed of liquid when it reaches a certain level (for example within a tank).

In a further embodiment of the invention where the liquid is of electrically conducting type, instead of a sensor provided with an element of expandable material there can be provided a usual means for detecting liquid presence by virtue of the fact that the liquid is a conductor, so that the liquid closes the circuit by which the signal emitter is activated. This arrangement can be of interest by virtue of its low cost,. In particular, the means for sensing the presence of electrically conducting liquid can be an open electrical circuit which is closed by the presence of the liquid.

As already stated, in place of the already existing electrical installation 34, a separate battery-powered installation could be provided for feeding signals to the actuator device.

The sensor 12 can be provided with a mesh (not shown) to be fitted to its lower face and already having the expandable material element 16 and the possible permanent magnet already applied to it. It is hence possible, once the expandable element has come into contact with the liquid (and hence undergone considerable volume increase), to remove the combined mesh, expanded element and permanent magnet, and replace it with a new combination in which the expandable element is still in its unexpanded state.

The batteries which power the system or its individual parts are conveniently provided with a device for indicating their state of charge.

## Claims

1. A system for sensing within an environment the presence of a liquid fed by a relative network present in the environment, and for blocking the liquid feed, characterised by comprising:
- at least one device for sensing the presence of the liquid at points of the environment in which the sensing devices are positioned, each sensing device being provided with means enabling signals to be emitted following the sensing of liquid presence; and
- an actuator device for closing a valve provided in the network, to block liquid feed following signal emission by a sensing device.

2. A system as claimed in claim 1, wherein the signal emitter means are activated by closure of an electrical circuit caused by the presence of liquid.

3. A system as claimed in claim 2, wherein the electrical circuit comprises totally or partly bare electric cables.

4. A system as claimed in claim 3, wherein the bare cables are contained in sheaths of electrically insulating but perforated material.

5. A system as claimed in claim 3, wherein the bare electric cables are contained in sheaths of spongy material.

6. A system as claimed in claim 2, wherein the sensing device comprises a liquid presence sensor, said sensor comprising an element expandable on liquid absorption, said expandable element being in contact with the environment, the electrical circuit closing to emit signals as the result of the volume increase of the expandable element.

7. A system as claimed in claim 6, wherein the expandable element is enclosed in an open cavity provided in the sensor of the sensing device, to that face of the element of expandable material opposite that in contact with the environment there being applied a permanent magnet, the sensor comprising a water-tight chamber containing a switch connected into said electrical circuit, said switch being closed by the movement of the permanent magnet caused by the volume increase of the expandable element.

8. A system as claimed in claim 2, wherein the liquid is of electrically conducting type, the electrical circuit closing to emit signals as the result of presence of the liquid, which electrically connects together two or more electrical terminals of said circuit.

9. A system as claimed in claim 6 or 7, wherein the signals are transmitted by the sensing device to the actuator device via an electrical circuit.

10. A system as claimed in claim 1, wherein the signal emitter means comprise a carrier wave transmitter which uses as the electrical circuit for signal transmission the electrical installation already present within the environment.

11. A system as claimed in claim 2, wherein the signal emitter means comprise a radio signal emitter, the actuator device comprising a radio signal receiver.

12. A system as claimed in any one of the preceding claims, wherein a switch means is also provided which, following signal emission by the sensing device, switches off either the power supply to the electrical installation within the environment or specific appliances connected thereto, and/or operates an acoustic and/or visual alarm, and/or operates devices able to send alarm messages.

13. A system as claimed in claim 10, wherein the actuator device comprises an actuator means connected by electric cable to a single-channel receiver connected to the electrical installation present in the environment.

14. A system as claimed in claim 13, wherein the single-channel receiver comprises a control unit for the actuator means.

15. A system as claimed in claim 12 or 13, wherein the actuator means comprises an electric motor mounted on the valve stem.

16. A system as claimed in claim 15, wherein the actuator means comprises a switch means which, when the valving element of the valve reaches its end-of-travel position, interrupts power to the electric motor.

17. A system as claimed in claim 10, 13 or 14, wherein several sensing devices are provided within the environment, there being also provided a multi-channel receiver for indicating from which of the sensing devices the alarm signal has originated.

18. A system as claimed in claim 7, wherein a mat of a material soakable by liquid is interposed between the expandable element and the environment.

19. A system as claimed in claim 1, wherein the valve is a solenoid valve, the solenoid of which forms part of the actuator device.

20. A system as claimed in claim 19, wherein the solenoid valve is provided with means which prevent it from opening unless as the result of specific activation of the solenoid valve.
